# EUROPEAN PATENT APPLICATION

(11) **EP 0 594 288 A1**
(43) Date of publication of application: **27.04.1994**
(21) Application number: 93306850.4
(22) Date of filing: 31.08.1993
(51) Int. Cl.: G08B 29/18

(54) **Smoke detector with capacitor back-up**

(30) Priority: 31.08.1992 CA 2077228
(71) Applicant: DISYS CORPORATION, Toronto Ontario M9M 2H4 (CA)
(72) Inventor: Lennartz, Gary, Rexdale, Ontario M9W 3G9 (CA)
(74) Representative: Read, Matthew Charles

(57) **Abstract**

A power supply circuit for use in an alarm circuit powered by an AC source, comprising a large capacitor intermediate the alarm circuit and the AC source for receiving and storing electrical charge from the AC source and discharging in the event of failure of the AC source thereby powering the alarm circuit.

## Description

### Field of the Invention

The present invention relates in general to power supply circuits, and more particularly to a capacitor back-up power supply circuit for use with AC powered alarm systems.

### Background of the Invention

Alarm circuits are well known for intrusion detection, smoke or fire detection, etc. Many such alarm systems are powered via domestic or alternating current (AC) power sources. In the event of interruption of AC power to such circuits, it is well known to provide a battery back-up to ensure continuous functioning of the alarm circuit for the duration of AC power black-out.

According to such well known prior art systems, circuitry is provided for detecting the absence of AC power applied to the alarm circuit and in response tripping a switch which connects a DC battery across the power supply terminals of the alarm circuit for maintaining continuous function of the alarm circuit.

One disadvantage of prior art battery back-up power supply circuits is the requirement for periodic maintenance of the alarm circuit (e.g. battery replacement, etc.). Failure to properly maintain the alarm circuit can result in accidental shut-down in the event of AC power black-out and a discharged battery. The requirement to periodically maintain the alarm circuits necessitates maintenance access to the circuit through the housing of the alarm. This is typically accomplished by means of access openings in the alarm compartment and suitable latched or locking covers.

Furthermore, most battery back-up power supplies utilize nicad battery sources. Since nicad batteries contain poisonous substances, many States are now banning the use of nicad batteries in alarm circuits.

### Summary of the Invention

According to the present invention, an improvement in AC powered alarm circuits is provided in which the well known back-up battery is replaced by a large capacitance intermediate the alarm circuit and the AC source for receiving and storing electrical charge from the AC source and discharging in the event of failure of the AC source for powering the alarm circuit.

The use of a capacitor in lieu of a battery for AC power back-up benefits from the advantages of eliminating the requirement for periodic maintenance, simplifying the compartment or enclosure design since no maintenance is required, and eliminating the use of poisonous nicad batteries.

In accordance with an aspect of the present invention, there is provided an improvement for use with an alarm circuit powered by an AC source, the improvement comprising large capacitance means intermediate the alarm circuit and the AC source for receiving and storing electrical charge from the AC source and discharging the capacitance means in the event of failure of the AC source for powering the alarm circuit.

According to a further embodiment of the invention, there is provided a power supply circuit for connection to an AC power source and alarm circuit comprising:
a) a pair of input terminals for receiving AC power from said AC power source;
b) current limiter means connected to a first one of said pair of input terminals for limiting said AC power to a predetermined current value;
c) rectifier means connected to said current limiter means and a second one of said pair of input terminals, for rectifying said AC power; and
d) large capacitance means connected to said rectifier means and said alarm circuit, for receiving and storing said AC power and discharging in the event of failure of said AC power source to thereby power said alarm circuit.

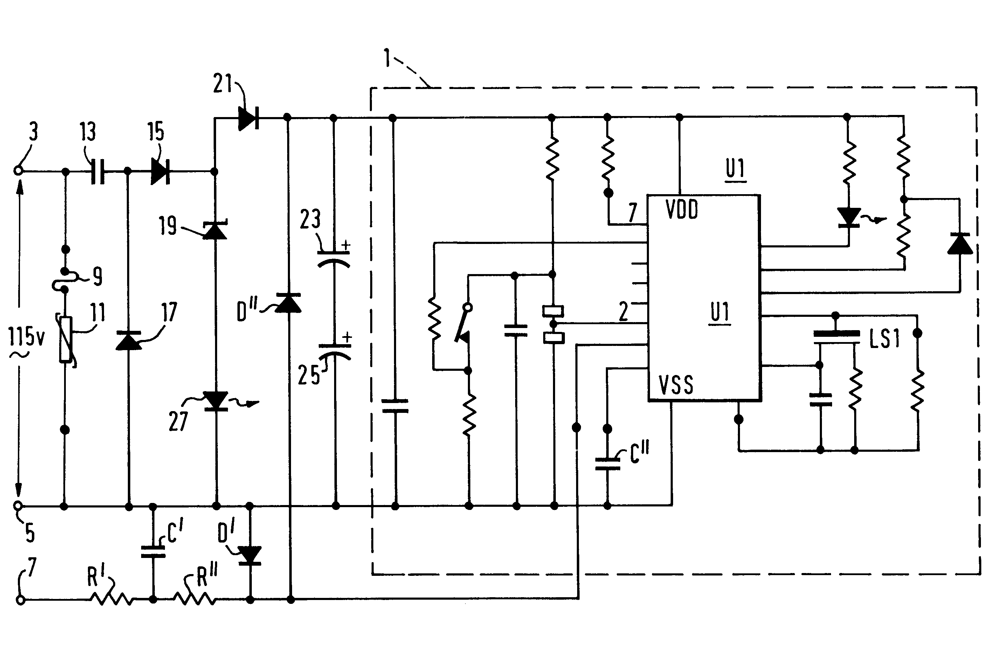

### Brief Description of the Drawing

A detailed description of the preferred embodiment is provided hereinbelow with reference to the sole Figure in which a circuit diagram is provided showing the power supply circuit of the present invention connected to an AC power source and an alarm circuit.

### Detailed Description of the Preferred Embodiment

With reference to the sole Figure, an alarm circuit 1 is shown in the form of a smoke detector. However, any other suitable AC power alarm circuit may be used such as a motion detector, heat sensor, etc.

A source of power is provided in the form of 115 volts AC applied to the live-black terminal 3 and neutral-white terminal 5 of the circuit. Terminal 7 is used for interconnection of multiple alarm circuits. A fuse 9 is connected in series with a varistor 11 (transient suppressor) across the live and neutral terminals 3 and 5, in a well known manner.

AC power received via the terminals 3 and 5 is limited via current limiting capacitor 13 and then half- wave rectified via diodes 15 and 17. AZenerdiode 19 limits the voltage applied to the alarm circuit 1 in the event of power surges due to lightening strikes, etc. The rectified current is then applied via diode 21 to a pair of series connected capacitors 23 and 25, as well as to the power supply inputs VDD and VSS of the smoke detector integrated circuit U1 of alarm circuit 1. The details of operation of circuit 1 do not form the subject of the present invention, but would be well known to a person skilled in the art to which the invention pertains.

The capacitors 23 and 25 are preferably large capacitance electric double layer capacitors such as the Panasonic D series model number EECW5R5D335 which is characterized by a nominal capacitance of 3.3 Farads, and in-flow current of 0.44 mA and an internal resistance at 1 kilohertz of 2.5 ohms. Therefore, the combined capacitance of series connected capacitors 23 and 25 is 1.65 Farads.

In operation, the capacitors 23 and 25 charge to full potential within 15 minutes to two hours. During charging, and during normal AC powering of the alarm circuit 1, a light emitting diode 27 is illuminated to provide an indication that the alarm circuit is being powered by the AC power source. In the event of failure of the AC power source, capacitors 23 and 25 begin discharging through the alarm circuit 1. Diode 21 is reverse biased for preventing reverse current flow therethrough and ensuring that all of the power being discharged from capacitors 23 and 25 is absorbed by the alarm circuit 1.

According to a successful prototype of the invention, the alarm circuit 1 is capable of functioning for six days on normal stand-by mode (the usual regulatory requirement being twenty-four hours), and for over four minutes on alarm mode (the usual regulatory requirement being four minutes).

The circuit U1 within alarm circuit 1 is also typically provided a sound source or buzzer LS1 which "chirps" when the supply voltage applied to inputs VDD and VSS is less than a predetermined threshold voltage. Therefore, in the event of failure of the AC power source, the LED 27 ceases to be illuminated, and the alarm circuit 1 continues to operate under back-up power received from capacitors 23 and 25. However in event of substantial discharge of the capacitors 23 and 25 prior to re-activation of the AC powersource, the circuit U1 begins to generate an audible alarm for alerting personnel to take other remedial measures.

The orange lead 7 allows interconnection of several units sound an alarm when one unit senses smoke. The red LED connected to pin 5 of alarm circuit U1 flashes only in unit(s) which are sensing smoke. The components (i.e. resistors, capacitor and diode) which are attached to the I/O pin 2 filter noise and protect the alarm circuit U1 from excessive voltage. More particularly, parallel combination or resistor R' and capacitor C' filters noise. Both resistors R' and R" limit current. The diodes D' and D" connected to Vₛₛ and V_{DD}, respectively, conduct if the voltage at pin 7 U7 is outside of the normal range of VDD and VSS, due to wiring errors or induced voltage. This limits the voltage at the I/O pin 2 of U1 to a safe range (VDD + 0.7V to VSS-0.7V).

In summary, according to the present invention, a power supply circuit is provided which requires no maintenance, and which exceeds normal regulatory standby operation criteria. The system replaces the prior art requirement for back-up batteries, and is of inexpensive and straightforward construction.

Alternatives and other embodiments of the invention are possible within the sphere and scope of the claims appended hereto.

The circuit U1 in the alarm circuit 1 may comprise, for example a Motorola MC14467 or an Allegro 5348.

## Claims

1. In an alarm circuit powered by an AC source, the improvement comprising large capacitance means intermediate said alarm circuit and said AC source for receiving and storing electrical charge from said AC source and discharging in the event of failure of said AC source for powering said alarm circuit.

2. The improvement of claim 1, further comprising means for isolating said AC source from said large capacitance means to prevent power draw by said AC source from said large capacitance means in the event of failure of said AC source.

3. The improvement of claim 1, further comprising means for indicating status of said AC source.

4. The improvement of claim 1, wherein said large capacitance means comprises a pair of series connected 3.3 Farad capacitors.

5. The improvement of claim 2, wherein said means for isolating comprises a diode having cathode connected to said AC source and anode connected to said large capacitance means.

6. The improvement of claim 3, wherein said means for indicating status comprises a light emitting diode connected to said AC source.

7. A power supply circuit for connection to an AC power source and an alarm circuit, comprising:
a) a pair of input terminals for receiving AC power from said AC power source;
b) current limiter means connected to a first one of said pair of input terminals for limiting said AC power to a predetermined currentval- ue;
c) rectifier means connected to said current limiter means and a second one of said pair of input terminals, for rectifying said AC power; and
d) large capacitance means connected to said rectifier means and said alarm circuit, for receiving and storing said AC power and discharging in the event of failure of said AC power source to thereby power said alarm circuit.

8. The power supply circuit of claim 7, further comprising means for isolating said AC power source from said large capacitance means to prevent power draw by said AC power source from said large capacitance means in the event of failure of said AC power source.

9. The power supply circuit of claim 7, further comprising means for indicating status of said AC power source.

10. The power supply circuit of claim 7, wherein said large capacitance means comprises a pair of series connected 3.3 Farad capacitors.

11. The power supply circuit of claim 8, wherein said means for isolating comprises a diode having cathode connected to said rectifier means and anode connected to said large capacitance means.

12. The power supply circuit of claim 9, wherein said means for indicating status comprises a light emitting diode connected in parallel with said large capacitance means.

13. The power supply circuit of claim 7, further comprising voltage limiter means connected to said rectifier means and said second one of said pair of input terminals for limiting said AC power to a predetermined voltage value.

14. The power supply circuit of claim 13, wherein said voltage limiter means comprises a Zener diode having anode connected to said rectifier means and cathode connected to said second one of said pair of input terminals.
